(19) Europäisches Patentamt
European Patent Office
Office européen des brevets

(11) **EP 2 650 243 B1**

(12) **EUROPEAN PATENT SPECIFICATION**

(45) Date of publication and mention
of the grant of the patent:
**21.06.2017 Bulletin 2017/25**

(51) Int Cl.:
***B65H 3/52*** *(2006.01)*     ***B65H 3/06*** *(2006.01)*

(21) Application number: **13152191.6**

(22) Date of filing: **22.01.2013**

(54) **Sheet separation pad and image forming apparatus**

Blatttrennungspad und Bilderzeugungsvorrichtung

Tampon de séparation de feuille et appareil de formation d'image

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2012 JP 2012091299**

(43) Date of publication of application:
**16.10.2013 Bulletin 2013/42**

(73) Proprietor: **Sumitomo Rubber Industries, Ltd.
Kobe-shi,
Hyogo-ken (JP)**

(72) Inventor: **Hanyu, Atsushi
Kobe-shi, Hyogo-ken, 651-0072 (JP)**

(74) Representative: **Manitz Finsterwald Patentanwälte
PartmbB
Martin-Greif-Strasse 1
80336 München (DE)**

(56) References cited:
**JP-A- 2001 322 731    JP-A- 2003 118 860
US-A- 5 697 604**

**Description**

[TECHNICAL FIELD]

The present invention relates to a sheet separation pad for separating a plurality of stacked sheets from each other and feeding out the sheets one by one, and an image forming apparatus which incorporates the sheet separation pad.

[BACKGROUND ART]

Sheet feed cassettes or sheet feed trays of image forming apparatuses such as electrostatic copying machines, laser printers, plain paper facsimile machines and copier-printer-facsimile multifunction machines include a sheet feeding mechanism for preventing a so-called multiple-sheet feeding phenomenon such that two or more of sheets stacked and accommodated therein are erroneously fed out together in an overlapping state. The sheet feeding mechanism generally includes a sheet feed roller, and a sheet separation pad to be brought into contact with an outer peripheral surface of the sheet feed roller by a pressing force of a spring or the like.

The sheet feeding mechanism serves to separate the first sheet brought into contact with the sheet feed roller from the other sheets (the second and subsequent stacked sheets) and feed out only the first sheet by rotation of the sheet feed roller, while substantially preventing the other sheets from being erroneously fed out by a frictional force of the sheet separation pad.

A planar pad made of an elastomer such as a rubber and having a surface serving as a flat contact surface to be brought into contact with the sheet feed roller and the sheet is generally used as the sheet separation pad (see Patent Documents 1 to 3).

[PRIOR ART LITERATURE]

[PATENT DOCUMENTS]

Patent Document 1: JP-HEI5(1993)-43070A
Patent Document 2: JP-3977819B
Patent Document 3: JP-4176592B
Patent Document 4: JP-HEI7(1995)-112837A
Patent Document 5: JP-HEI9(1997)-202474A

[SUMMARY OF INVENTION]

[PROBLEMS TO BE SOLVED BY THE INVENTION]

The sheet separation pad is required to be excellent in sheet separating capability as well as sheet feeding capability which is contradictory to the sheet separating capability and ensures smooth feed-out of a single separated sheet without any sheet feed-out failure. Further, the sheet separation pad is required to be free from significant change in the surface state (particularly, friction coefficient) of the contact surface with excellent wear resistance even after a multiplicity of sheets are fed out, and free from chattering during the feeding of the sheets with excellent noiseless property, and to have a hardness suitable for the sheet separation pad.

Particularly, the excellent sheet separating capability and the excellent sheet feeding capability are required as fundamental factors. However, properties required for the sheet separation pad in order to achieve these contradictory capabilities vary depending on the type of sheets.

Particularly, the sheet separation pad is required to have significantly different properties depending on the type of sheets to be handled, i.e., for plastic film sheets such as OHP film sheets, heavier paper sheets, surface-coated glossy sheets and plain paper sheets such as copy sheets.

For the plain paper sheets, the sheet separation pad preferably has a smoothest possible contact surface for stably feeding a single separated sheet while preventing the sheet from being caught by the sheet separation pad. For the OHP film sheets or the like, on the other hand, the sheet separation pad preferably has a moderately roughened contact surface or is made of a material unlikely to intimately adhere to the OHP film sheets. This is because the sheet separation pad, if having a smooth contact surface, is liable to intimately adhere to the OHP film sheets to fail to stably feed out a single separated OHP film sheet.

For the plain paper sheets, the width of the contact surface as measured perpendicularly to a sheet feed-out direction is increased to reduce an influence of paper dust, toner and the like adhering to the contact surface, thereby making it possible to more stably feed out the single separated sheet while preventing the sheet from being caught by the sheet separation pad. For the OHP film sheets, on the other hand, the contact surface preferably has a smallest possible width to stably feed out the sheet while preventing the adhesion to the sheet.

A range of the friction coefficient of the contact surface that ensures the excellent sheet separating capability as well as the excellent sheet feeding capability to stably feed out the single separated sheet while preventing the sheet from being caught by the sheet separation pad is significantly different between the OHP film sheets and the plain paper sheets.

Therefore, it is a conventional practice to produce and use different sheet separation pads for different types of sheets.

In the production of the different sheet separation pads for the different types of sheets, the surface state and the width of the contact surface are changed. Further, a material to be used for the production of the sheet separation pads is generally changed to control the friction coefficient of the contact surface within ranges suitable for the respective types of sheets.

Where the material is changed according to the type of sheets, however, tremendous amounts of time and costs are required for development of the material. Even if the friction coefficient can be controlled within the intended ranges, the sheet separation pads may fail to satisfy requirements for other properties. For example, the sheet separation pads may be deteriorated in wear resistance and noiseless property, or may be changed in hardness.

Where the width of the contact surface is changed, it is often impossible to install a sheet separation pad having an intended width at an intended position because of dimensional restriction around the position.

Another approach to be employed instead of the method of changing the width of the contact surface is a method of controlling the area of contact of the contact surface with respect to the sheet by foaming an elastomer to form a sheet separation pad having a porous structure, and polishing a contact surface of the sheet separation pad to randomly form a multiplicity of openings in the contact surface with a multiplicity of open cells in the porous structure.

However, the sheet separation pad of the porous structure has a smaller density and, therefore, is liable to be worn and, when pressure is applied to the sheet separation pad for a longer period of time, suffer from permanent compressive deformation to have a shorter service life.

The surface state of the contact surface is changed typically by preparing a die having a shape imparting surface having an intended surface geometry and then transferring the surface geometry of the shape imparting surface of the die to the contact surface. Where the contact surface is to be smoothed, for example, the shape imparting surface may be finished smoothly. Where the contact surface is to be moderately roughened, on the other hand, the shape imparting surface may be finished to have a rough surface or a textured surface.

However, the minute surface state of the contact surface is liable to be significantly changed due to wear of the contact surface when a multiplicity of sheets are fed out by the sheet separation pad. Further, paper dust, toner and the like are liable to adhere to the contact surface. Therefore, the friction coefficient of the contact surface is liable to be significantly changed in a short period of time due to the change in surface state during repeated sheet feeding and due to gradual accumulation of the paper dust and the toner, making it impossible to ensure the excellent sheet separating capability and the excellent sheet feeding capability for a long period of time.

JP 2003118860A discloses a sheet separation pad in accordance with the preamble of claim 1.

JP 2001322731A describes a sheet separation pad whose edge portion is formed in a trapezoidal shape to reduce damage to the passing sheets and whose contact surface is provided with through-holes in order to increase the friction coefficient of the contact surface.

It is therefore an object of the present invention to provide a sheet separation pad having an optimum sheet separating capability and an optimum sheet feeding capability according to the type of sheets for a long period of time, and to provide an image forming apparatus incorporating the sheet separation pad.

This object is satisfied by the sheet separation pad in accordance with claim 1. The dependent claims are directed to preferred embodiments.

[SOLUTION TO PROBLEM]

According to the present invention, there is provided a sheet separation pad comprising a nonporous planar body which has a surface serving as a contact surface to be brought into contact with a sheet, and a plurality of recesses each having a predetermined depth as measured in a thickness direction perpendicular to the contact surface, the recesses each having an opening formed in the contact surface as having a round plan shape or a plan shape inscribed in a circle as viewed in plan of the contact surface, and each having an opening area of not less than 0.7 mm$^2$ and not greater than 20 mm$^2$.

In the present invention, the recesses having an opening area within the aforementioned range are provided in the contact surface. The contact area of the contact surface of the sheet separation pad with respect to the sheet is controlled by changing the number, the density or the opening area of the recesses. Thus, the friction coefficient of the contact surface can be controlled within an optimum range according to the type of sheets.

Therefore, the same material can be used for production of the sheet separation pad irrespective of the type of sheets, thereby saving the time and the costs required for the development of the material. In addition, the sheet separation pad has an excellent sheet separating capability and an excellent sheet feeding capability based on the optimum friction coefficient, and yet is free from the deterioration in other properties such as wear resistance and noiseless property required for the sheet separation pad and free from the change in hardness.

The recesses are provided in a relatively macroscopic form defined by the predetermined range of the opening area. Unlike the friction coefficient defined by the minute surface state in the prior art, the friction coefficient of the contact surface defined by forming the openings of the recesses in the contact surface is not significantly changed due to the wear in a shorter period of time. Further, paper dust, toner and the like are scraped by edges of the openings to be trapped in the recesses, whereby the friction coefficient of the contact surface is prevented from being changed due to the paper dust and the toner.

In the present invention, therefore, the friction coefficient of the contact surface can be maintained within the optimum range according to the type of sheets, and the excellent sheet separating capability and the excellent sheet feeding capability can be correspondingly maintained for a long period of time. This is achieved synergetically by the fact that the sheet separation pad is entirely nonporous and, therefore, is less liable to suffer from the wear and the permanent compressive deformation.

In the present invention, the range of the opening area of each of the recesses formed in the contact surface is limited within the aforementioned range for the following reasons:

If the opening area is less than $0.7 \text{ mm}^2$, it is impossible to sufficiently provide the effect of controlling the contact area and the friction coefficient of the contact surface with respect to the sheet by forming the openings of the recesses in the contact surface. Further, the effect of scraping the paper dust and the tonner by the edges of the openings and trapping the paper dust and the tonner in the recesses to prevent the change in the friction coefficient of the contact surface due to the paper dust and the toner is insufficient.

If the opening area is greater than $20 \text{ mm}^2$, the sheet (particularly, a leading edge of the sheet) is liable to be caught by the edges of the openings of the recesses, resulting in sheet feed-out failure and increased noise during the sheet feeding.

Where the opening area is within the aforementioned range, in contrast, it is possible to maintain the optimum sheet separating capability and the optimum sheet feeding capability according to the type of sheets for a long period of time by the aforementioned mechanism. This is achieved synergetically by the fact that the sheet separation pad is entirely nonporous and, therefore, is less liable to suffer from the wear and the permanent compressive deformation.

Patent Document 4 discloses a sheet separation pad including a plurality of grooves provided in a contact surface thereof parallel to a sheet feeding direction as extending along the entire length of the contact surface in the sheet feeding direction and each having a greater width at a downstream side than at an upstream side with respect to the sheet feeding direction.

With the provision of the plurality of grooves, it is supposed that the contact area and the friction coefficient of the contact surface with respect to the sheet can be controlled as in the present invention.

However, edges of the grooves are inclined with respect to the sheet feeding direction because the grooves each have different widths at the downstream side and at the upstream side. Therefore, there is a possibility that side edges of the sheet is guided by the edges of the grooves, resulting in oblique feeding of the sheet.

Although the edges of the grooves are inclined with respect to the sheet feeding direction as described above, angles formed between the edges of the grooves and the sheet feeding direction are small. Therefore, the grooves are less effective than the recesses according to the present invention for scraping and trapping the paper dust and the toner therein to prevent the change in the friction coefficient of the contact surface which may otherwise occur due to the paper dust and the toner.

In FIG. 7 in Patent Document 5, a sheet separation pad is illustrated, which includes a plurality of notches provided in a contact surface thereof as each having a generally V-shaped cross section and extending along the entire width of the contact surface perpendicularly to the sheet feeding direction.

With the provision of the plurality of notches, it is supposed that the contact area and the friction coefficient of the contact surface with respect to the sheet can be controlled as in the present invention. Further, the notches sufficiently function to scrape and trap the paper dust and the toner therein to prevent the change in the friction coefficient of the contact surface due to the paper dust and the toner, because the edges of the notches are generally perpendicular to the sheet feeding direction.

With the provision of the notches, however, the sheet (particularly, the leading edge of the sheet) is liable to be caught by the edges of the notches, resulting in sheet feed-out failure and increased noise during the sheet feeding.

In the inventive sheet separation pad, the openings of the recesses each have a round plan shape having an opening diameter Φ of not less than 1.0 mm and not greater than 5.0 mm as viewed in plan of the contact surface, and the shortest distance G between the nearest adjacent ones of the recesses is preferably not less than 25 % and not greater than 600 % of the opening diameter Φ.

Since the openings each have a round plan shape, the sheet is further less liable to be caught by the openings as described above.

The opening diameter Φ of each of the round openings is preferably within the aforementioned range for the following reasons:

If the opening diameter Φ is less than 1.0 mm, the opening area described above is insufficient, making it impossible to provide the effect of controlling the contact area and the friction coefficient of the contact surface with respect to the sheet by forming the openings of the recesses in the contact surface. Further, the effect of scraping the paper dust and the tonner by the edges of the openings and trapping the paper dust and the tonner in the recesses to prevent the change in the friction coefficient of the contact surface due to the paper dust and the toner may be insufficient.

If the opening diameter Φ is greater than 5.0 mm, on the other hand, the opening area described above is excessively great. Therefore, the sheet (particularly, the leading edge of the sheet) is liable to be caught by edges of the openings of the recesses, resulting in sheet feed-out failure and increased noise during the sheet feeding.

Where the opening diameter Φ of each of the round openings is within the aforementioned range, in contrast, it is possible to maintain the optimum sheet separating capability and the optimum sheet feeding capability according to the type of sheets for a long period of time by the aforementioned mechanism. This is achieved synergetically by the fact that the sheet separation pad is entirely nonporous and, therefore, is less liable to suffer from the wear and the permanent compressive deformation.

Further, the shortest distance G between the nearest adjacent ones of the recesses is preferably not less than 25 % and not greater than 600 % of the opening diameter Φ for the following reasons:

If the shortest distance G is less than the aforementioned range, the contact area of the contact surface that provides friction with respect to the sheet is excessively small, making it impossible to impart the contact surface with a proper friction coefficient. Since the distance between the adjacent recesses is excessively short, the openings are liable to suffer from deformation such as tear-off occurring due to a load during the sheet feeding. In the worst case, edges of the deformed openings project upward from the contact surface to catch the sheet (particularly, the leading edge of the sheet), resulting in sheet feed-out failure.

If the shortest distance G is greater than the aforementioned range, on the other hand, the recesses account for only a small proportion of the contact surface of the sheet separation pad having a common size (e.g. , a length of about 10 mm to about 40 mm as measured perpendicularly to the sheet feeding direction and a width of about 3 mm to about 15 mm as measured in the sheet feeding direction). Particularly if the recesses are locally provided only in a longitudinal part of the contact surface, the friction coefficient of the contact surface with respect to the sheet is uneven, so that the sheet is liable to be obliquely fed.

Where the shortest distance G is within the aforementioned range, in contrast, it is possible to impart the contact surface with a proper friction coefficient, while preventing the sheet feed-out failure and the sheet oblique feeding which may otherwise occur when the sheet is caught.

In the inventive sheet separation pad, the percentage (opening percentage) of the total opening area of the recesses of the contact surface based on the overall area of the contact surface is preferably not greater than 50 %.

If the opening percentage is greater than the aforementioned range, the contact area of the contact surface that provides friction with respect to the sheet is excessively small, making it impossible to impart the contact surface with a proper friction coefficient. Further, the distance between the adjacent recesses is excessively short, so that the openings are liable to suffer from deformation such as tear-off which may otherwise occur due to a load during the sheet feeding. In the worst case, edges of the deformed openings project upward from the contact surface to catch the sheet (particularly, the leading edge of the sheet), resulting in sheet feed-out failure.

Where the opening percentage is within the aforementioned range, it is possible to impart the contact surface with a proper friction coefficient, while preventing the deformation such as tear-off of the contact surface and the sheet feed-out failure due to the deformation.

The present invention also provides an image forming apparatus including the inventive sheet separation pad.

According to the present invention, sheets such as paper sheets or OHP film sheets can be properly fed out of a sheet feeding cassette or a sheet feeding tray without the multiple-sheet feeding and the sheet feed-out failure by the function of the inventive sheet separation pad, and used for image formation.

[EFFECTS OF INVENTION]

The present invention provides a sheet separation pad which can maintain an optimum sheet separating capability and an optimum sheet feeding capability according to the type of sheets for a long period of time without any of various problems encountered by the prior-art sheet separation pad having a planar contact surface and the prior-art sheet separation pad formed with grooves or notches, and an image forming apparatus incorporating the inventive sheet separation pad.

[BRIEF DESCRIPTION OF DRAWINGS]

FIG. 1 is a perspective view showing the appearance of a sheet separation pad with recesses 4 according to one embodiment of the present invention.

FIG. 2 is an enlarged plan view showing a contact surface of the sheet separation pad with recesses 4 of the embodiment of FIG. 1.

FIG. 3A is a sectional view showing a part of the sheet separation pad with recesses 4 of the embodiment of FIG. 1 on an enlarged scale.

FIG. 3B is a sectional view showing a part of a sheet separation pad with through-holes 5 on an enlarged scale.

FIG. 4 is a schematic sectional view showing an exemplary sheet feeding mechanism of an image forming apparatus incorporating the inventive sheet separation pad.

FIGS. 5A to 5D are plan views of sheet separation pads (provided for explanatory purposes).

FIGS. 6A to 6D are plan views of sheet separation pads (provided for explanatory purposes).

FIGS. 7A to 7D are plan views of sheet separation pads.

[DESCRIPTION OF EMBODIMENTS]

<Sheet Separation Pad>

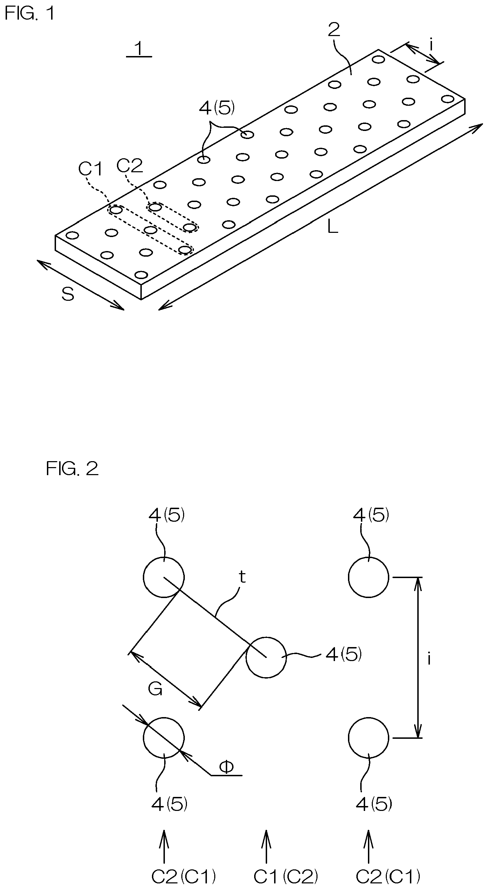

Referring to FIG. 1, the sheet separation pad 1 with recesses 4 according to this embodiment has a rectangular planar shape having a predetermined thickness, and its upper surface serves as a contact surface 2 to be brought into contact with a sheet (not shown).

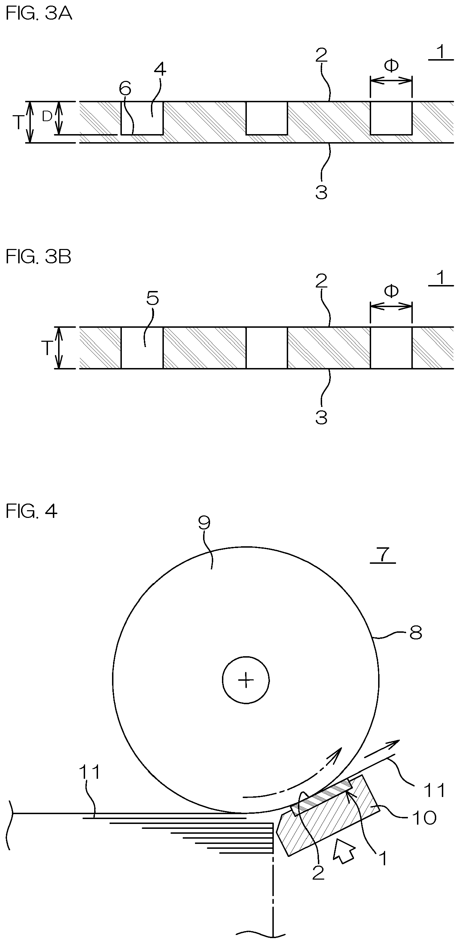

The sheet separation pad 1 of the present invention incudes a plurality of recesses 4. Alternatively, the sheet separation pad of the present invention may include recesses 4 and through-holes 5 in combination. Figures showing only through-holes 5, for example Fig. 3B, are provided for explanatory purposes only.

Referring to FIGS. 1, 3A and 3B, an opposite surface 3 of the sheet separation pad 1 facing away from the contact surface 2 is disposed parallel to the contact surface 2, so that the sheet separation pad 1 entirely has a constant thickness. The contact surface 2 and the opposite surface 3 each have a rectangular plan shape and, hence, the sheet separation pad 1 entirely has a rectangular planar shape.

The sheet separation pad 1 is entirely made of at least one elastomer selected from rubbers such as ethylene propylene diene rubbers (EPDM) and thermoplastic elastomers such as polyurethane thermoplastic elastomers and polyester thermoplastic elastomers, and is nonporous substantially without internal cells. A filler such as carbon black may be blended with the elastomer, for example, for adjusting the hardness. Where the elastomer is a rubber, an additive such as a crosslinking component may be blended with the rubber.

Referring to FIGS. 1, 3A and 3B, the sheet separation pad 1 includes a plurality of recesses 4 or a plurality of through-holes 5, which each have an opening formed in the contact surface 2 thereof and having a round plan shape as viewed in plan of the contact surface 2. The recesses 4 each have a predetermined depth as measured in a thickness direction of the sheet separation pad 1. The through-holes 5 each extend from the contact surface 2 to the opposite surface 3 of the sheet separation pad 1.

Referring to FIGS. 1 and 3A showing an inventive embodiment, the recesses 4 each have a round bottom 6 having the same diameter as the opening as viewed in plan of the contact surface 2. A portion of each of the recesses 4 between the opening and the bottom 6 has a round plan shape having the same diameter as the opening and the bottom 6 as viewed in plan of the contact surface 2.

The depth D of each of the recesses 4 measured in the thicknesswise direction of the sheet separation pad 1 may be set at any value less than the thickness T of the sheet separation pad 1. However, the depth D is preferably not less than 50 % of the thickness T in order to allow the recesses 4 to properly function as pockets for trapping paper dust, toner and the like for a long period of time.

The upper limit of the depth D is defined to be less than the thickness T of the sheet separation pad 1 as described above. With this definition, the recesses 4 are formally discriminated from the through-holes 5 each having a depth D that is equal to the thickness T, but the recesses 4 and the through-holes 5 have the same function.

Referring to FIGS. 1 and 3B (which is shown for explanatory purposes only), the through-holes 5 each have openings formed in the contact surface 2 and the opposite surface 3 and each having a round plan shape as viewed in plan of the contact surface 2. A portion of each of the through-holes 5 between the contact surface 2 and the opposite surface 3 has a round plan shape having the same diameter as the openings formed in the contact surface 2 and the opposite surface 3 as viewed in plan of the contact surface 2.

Referring to FIGS. 1 to 3A and 3B, the opening area of each of the recesses 4 or the through-holes 5 in the contact surface 2 is limited within a range that is not less than 0.7 mm$^2$ and not greater than 20 mm$^2$.

If the opening area is less than 0.7 mm$^2$, it is impossible to sufficiently provide the effect of controlling the contact area and the friction coefficient of the contact surface 2 with respect to the sheet by forming the openings of the recesses 4 or the through-holes 5 in the contact surface 2. Further, the effect of scraping the paper dust and the tonner by the edges of the openings and trapping the paper dust and the tonner in the recesses 4 or the through-holes 5 to prevent the change in the friction coefficient of the contact surface 2 due to the paper dust and the toner is insufficient.

If the opening area is greater than 20 mm$^2$, on the other hand, the sheet (particularly, the leading edge of the sheet) is liable to be caught by the edges of the openings of the recesses 4 or the through-holes 5, resulting in sheet feed-out failure and increased noise during the sheet feeding.

Where the opening area is within the aforementioned range, in contrast, it is possible to maintain the optimum sheet separating capability and the optimum sheet feeding capability according to the type of sheets for a long period of time by the aforementioned mechanism. This is achieved synergetically by the fact that the sheet separation pad 1 is entirely nonporous and, therefore, is less liable to suffer from the wear and the permanent compressive deformation.

Where the openings of the recesses 4 or the through-holes 5 formed in the contact surface 2 each have a round plan shape as shown in FIGS. 1, 3A and 3B, the opening diameter $\Phi$ is preferably not less than 1.0 mm and not greater than 5.0 mm.

If the opening diameter $\Phi$ is less than the aforementioned range, it may be impossible to sufficiently provide the effect of controlling the contact area and the friction coefficient of the contact surface 2 with respect to the sheet by forming the openings of the recesses 4 or the through-holes 5 in the contact surface 2. Further, the effect of scraping the paper dust and the tonner by the edges of the openings and trapping the paper dust and the tonner in the recesses 4 or the through-holes 5 to prevent the change in the friction coefficient of the contact surface 2 due to the paper dust and the toner may be insufficient.

If the opening diameter is greater than the aforementioned range, on the other hand, the sheet (particularly, the leading edge of the sheet) is liable to be caught by the edges of the openings of the recesses 4 or the through-holes 5, resulting in sheet feed-out failure and increased noise during the sheet feeding.

Where the opening diameter is within the aforementioned range, in contrast, it is possible to maintain the optimum sheet separating capability and the optimum sheet feeding capability according to the type of sheets for a long period of time by the aforementioned mechanism. This is achieved synergetically by the fact that the sheet separation pad 1 is entirely nonporous and, therefore, is less liable to suffer from the wear and the permanent compressive deformation.

The recesses 4 or the through-holes 5 are arranged in a given arrangement in the contact surface 2.

In the sheet separation pad 1 shown in FIG. 1, three recesses 4 or through-holes 5 are equidistantly arranged at an interval i in a row C1 extending in the direction of a shorter edge S of the rectangular contact surface 2, and two recesses 4 or through-holes 5 are arranged at the same interval i in a row C2 extending in the direction of the shorter edge S of the rectangular contact surface 2. A plurality of such rows C1 and C2 are alternately equidistantly arranged in a direction of a longer edge L of the contact surface 2.

The recesses 4 or through-holes 5 arranged in the rows C1 and the recesses 4 or through-holes 5 arranged in the rows C2 are staggered by half the interval i of the recesses 4 or the through-holes 5.

Here, eight rows C1 each containing three recesses 4 or through-holes 5 are arranged in the direction of the longer edge L, and seven rows C2 each containing two recesses 4 or through-holes 5 are disposed between the rows C1.

Referring to FIGS. 1 and 2, the shortest distance G between the nearest adjacent ones of the thus arranged recesses 4 or through-holes 5 as viewed in plan of the contact surface 2 is preferably not less than 25 % and not greater than 600 % of the opening diameter $\Phi$ of each of the recesses 4 or the through-holes 5.

In FIG. 2, one of the recesses 4 or the through-holes 5 contained in the row C1 (or C2) is illustrated as located at the center. The shortest distance G with respect to the single center recess 4 or through-hole 5 in the sheet separation pad 1 shown in FIGS. 1 and 2 will be described by way of example. In FIG. 2, four recesses 4 or through-holes 5 disposed around the single center recess 4 or through-hole 5 and aligning in adjacent rows C2 (or C1) on opposite sides of the single center recess 4 or through-hole 5 are each defined as the nearest adjacent recess 4 or through-hole 5 with respect to the center recess 4 or through-hole 5.

In FIG. 2, the shortest distance G is defined as a direct distance between intersections at which a line t extending between the centers of the round openings of the two nearest adjacent recesses 4 or through-holes 5 crosses outer edges of the two openings.

If the shortest distance G is less than the aforementioned range, the contact area of the contact surface 2 that provides friction with respect to the sheet is excessively small, making it impossible to impart the contact surface 2 with a proper friction coefficient. Further, the distance between the adjacent recesses 4 or through-holes 5 is excessively short, so that the openings are liable to suffer from deformation such as tear-off which may otherwise occur due to a load during the sheet feeding. In the worst case, edges of the deformed openings project upward from the contact surface 2 to catch the sheet (particularly, the leading edge of the sheet), resulting in sheet feed-out failure.

If the shortest distance G is greater than the aforementioned range, on the other hand, the recesses 4 or the through-holes 5 account for only a small proportion of the contact surface 2 of the sheet separation pad 1 having a common size (e.g., a length of about 10 mm to about 40 mm as measured perpendicularly to the sheet feeding direction and a width of about 3 mm to about 15 mm as measured in the sheet feeding direction). Particularly if the recesses 4 or the through-holes 5 are locally provided only in a longitudinal part of the contact surface 2, the friction coefficient of the contact surface 2 with respect to the sheet is uneven, so that the sheet is liable to be obliquely fed out.

Where the shortest distance G is not less than 25 % and not greater than 600 % of the opening diameter Φ, in contrast, it is possible to impart the contact surface 2 with a proper friction coefficient, while preventing the sheet feed-out failure and the sheet oblique feeding which may otherwise occur when the sheet was caught.

Further, the percentage (opening percentage) of the total opening area of the recesses 4 or the through-holes 5 of the contact surface 2 based on the overall area of the contact surface 2 is preferably not greater than 50 %.

If the opening percentage is greater than the aforementioned range, the contact area of the contact surface 2 that provides friction with respect to the sheet is excessively small, making it impossible to impart the contact surface 2 with a proper friction coefficient. Further, the distance between the adjacent recesses 4 or through-holes 5 is excessively short, so that the openings are liable to suffer from deformation such as tear-off which may otherwise occur due to a load during the sheet feeding. In the worst case, edges of the deformed openings project upward from the contact surface 2 to catch the sheet (particularly, the leading edge of the sheet), resulting in sheet feed-out failure.

The opening percentage may be set at any value according to a desired friction coefficient range of the contact surface 2, but is preferably not less than 1 % within the aforementioned range.

If the opening percentage is less than the aforementioned range, it may be impossible to sufficiently provide the effect of controlling the contact area and the friction coefficient of the contact surface 2 with respect to the sheet by forming the openings of the recesses 4 or the through-holes 5 in the contact surface 2. Further, the effect of scraping the paper dust and the tonner by the edges of the openings and trapping the paper dust and the tonner in the recesses 4 or the through-holes 5 to prevent the change in the friction coefficient of the contact surface 2 due to the paper dust and the toner may be insufficient.

Where the opening percentage is within the aforementioned range, in contrast, it is possible to impart the contact surface 2 with a proper friction coefficient, while preventing deformation such as tear-off of the contact surface 2 and the sheet feed-out failure due to the deformation.

The plan shape of each of the openings of the recesses 4 or the through-holes 5 is not limited to the round shape, and other examples of the plan shape include a triangular shape, a rectangular shape, a pentagonal shape, a hexagonal shape, an octagonal shape, and any shapes inscribed in a circle. The openings formed in the contact surface 2 as each having any of these plan shapes each have an opening area of not less than 0.7 mm$^2$ and not greater than 20 mm$^2$.

Where the openings of the recesses 4 or the through-holes 5 each have a plan shape other than the round shape, the shortest distance G is defined as a direct distance between intersections at which a line t extending between the centers of circles in which the plan shapes of openings of the two nearest adjacent recesses 4 or through-holes 5 are inscribed crosses outer edges of the two openings.

A portion of each of the recesses 4 or the through-holes 5 that extends inward from the opening in the thicknesswise direction of the sheet separation pad 1 may have any proper plan shape and size. In consideration of the processing ease for the formation of the recesses 4 or the through-holes 5, the recesses 4 preferably each have the same plan shape at any position between the opening formed in the contact surface 2 and the bottom 6. Similarly, the through-holes 5 preferably each have the same plan shape at any position between the opening formed in the contact surface 2 and the opening formed in the opposite surface 3.

The sheet separation pad 1 having the recesses 4 or the through-holes 5 can be produced, for example, by molding the elastomer into a nonporous planar body, and forming the recesses 4 or the through-holes 5 in the planar body by post processing.

Alternatively, the elastomer may be supplied into a mold including pins complementary in shape to the recesses 4 or the through-holes 5. Where the elastomer is a rubber, the rubber is crosslinked. Where the elastomer is a thermoplastic elastomer, the thermoplastic elastomer is cooled to be solidified. Thus, the nonporous planar body and the recesses 4 or the through-holes 5 are simultaneously formed, whereby the sheet separation pad 1 is produced.

The recesses 4 or the through-holes 5 are preferably formed in a portion of the contact surface 2 inward of an outer peripheral edge of the contact surface 2, e.g., a portion of the contact surface 2 inward of an outer peripheral edge of the rectangular planar sheet separation pad 1 as shown in FIG. 1, so as not to exist on the outer peripheral edge.

Though not shown, longitudinally opposite end portions of the sheet separation pad 1 may be bent. In this case, a longitudinally inward surface portion of the sheet separation pad 1 defined between the bent opposite end portions serves as the contact surface 2, and the recesses 4 or the through-holes 5 are preferably formed in the longitudinally inward surface portion between the bent end portions so as not to exist in the bent end portions.

If the recesses 4 or the through-holes 5 are present on the outer peripheral edge or the bent end portions of the sheet separation pad 1, the sheet (particularly, the leading edge of the sheet) is liable to be caught by the edges of the openings of the recesses 4 or the through-holes 5, resulting in sheet feed-out failure and increased noise during the sheet feeding.

Where the recesses 4 or the through-holes 5 are formed so as not to exist on the outer peripheral edge or the bent end portions, in contrast, these problems are prevented.

The planar sheet separation pad 1 preferably has a Type-A Durometer hardness of not less than 60 degrees and not greater than 95 degrees, particularly preferably not less than 70 degrees and not greater than 90 degrees, as determined at a temperature of 23°C by a measurement method specified in the Japanese Industrial Standards JIS K6253:2006 "Rubber, vulcanized or thermoplastic - Determination of hardness."

If the hardness is less than the aforementioned range, the contact surface 2 of the sheet separation pad 1 is excessively soft and, therefore, liable to be worn by friction with respect to the sheet.

If the hardness is greater than the aforementioned range, the contact surface 2 is excessively hard. Therefore, the thicknesswise deformation of the sheet separation pad 1 tends to be reduced, for example, when the sheet separation pad 1 is incorporated in a sheet feed cassette or a sheet feed tray of an image forming apparatus and a sheet feed roller is brought into contact with the contact surface 2. This impairs the function of preventing the multiple-sheet feeding by the friction of the contact surface 2. Particularly, it may be impossible to provide the effect of preventing the multiple-sheet feeding for various types of sheets having different friction coefficients.

In order to control the hardness of the sheet separation pad 1, the type and the grade of the elastomer are properly selected, and the type and the amount of the filler to be blended with the elastomer are properly adjusted.

The thickness and the plan shape of the sheet separation pad 1 are properly determined according to the shape and the structure of the sheet feed cassette or the sheet feed tray of the image forming apparatus in which the sheet separation pad 1 is incorporated. The thickness T is preferably not less than 0.5 mm and not greater than 1.5 mm, particularly preferably not less than 1.0 mm and not greater than 1.2 mm, in order to properly separate the sheet while preventing the chattering during the sheet feeding.

<Image Forming Apparatus>

The inventive image forming apparatus includes the inventive sheet separation pad.

According to the present invention, sheets such as paper sheets and OHP film sheets can be fed out of the sheet feed cassette or the sheet feed tray without the multiple-sheet feeding and the sheet feed-out failure by the function of the inventive sheet separation pad, and used for image formation.

More specifically, the sheet separation pad can be incorporated in the sheet feed cassette or the sheet feed tray in the conventional manner.

FIG. 4 is a schematic sectional view showing an exemplary sheet feeding mechanism of the image forming apparatus incorporating the inventive sheet separation pad.

Referring to FIG. 4, the sheet feeding mechanism 7 according to this embodiment includes a sheet feed roller 9 having an outer peripheral surface 8 at least which is made of a rubber, and an inventive sheet separation pad 1 to be brought into contact with the outer peripheral surface 8 of the sheet feed roller 9 by a pressing force of an unillustrated spring or the like.

The sheet separation pad 1 is supported by a support base 10 with its contact surface 2 uncovered. With the contact surface 2 opposed to the outer peripheral surface 8 of the sheet feed roller 9, the support base 10 is pressed against the outer peripheral surface 8 by the unillustrated spring or the like as indicated by a white arrow in FIG. 4, whereby the contact surface 2 can be kept in contact with the outer peripheral surface 8 with the predetermined pressing force.

The sheet feeding mechanism 7 serves to separate a first sheet brought into contact with the sheet feed roller 9 from the other sheets (a second and subsequent sheets 11) stacked and accommodated in the sheet feed cassette or the sheet feed tray of the image forming apparatus and feed out only the first sheet 11 to the inside of the image forming apparatus as indicated by a solid line arrow in FIG. 4 by rotation of the sheet feed roller 9 in a direction indicated by a one-dot-and-dash line in FIG. 4, while substantially preventing the other sheets from being erroneously fed out by frictional force of the sheet separation pad 1.

The sheet separation pad 1 is fixed to the support base 10, for example, by a two-sided cohesive tape or a two-sided adhesive tape to be thereby incorporated in the sheet feeding mechanism 7.

[EXAMPLES]

<Example 1>

A sheet separation pad 1 was produced by blending and kneading 100 parts by mass of a polyester thermoplastic elastomer (HYTREL (registered trade name) 3046 available from Toray Du Pont Co., Ltd.) and 1 part by mass of carbon black (available under the trade name of SEAST SO from Tokai Carbon Co., Ltd.), forming the resulting mixture into a sheet, cutting the sheet into a rectangular body having a surface serving as a contact surface 2, and forming a plurality of through-holes 5 in the rectangular body.

The sheet separation pad 1 had a rectangular shape having a shorter edge S having a dimension of 8 mm and a longer edge L having a dimension of 30 mm, and had a thickness T of 1.2 mm.

Openings of the through-holes 5 formed in the contact surface 2 each had an opening diameter Φ of 1 mm and an opening area of 0.79 mm$^2$.

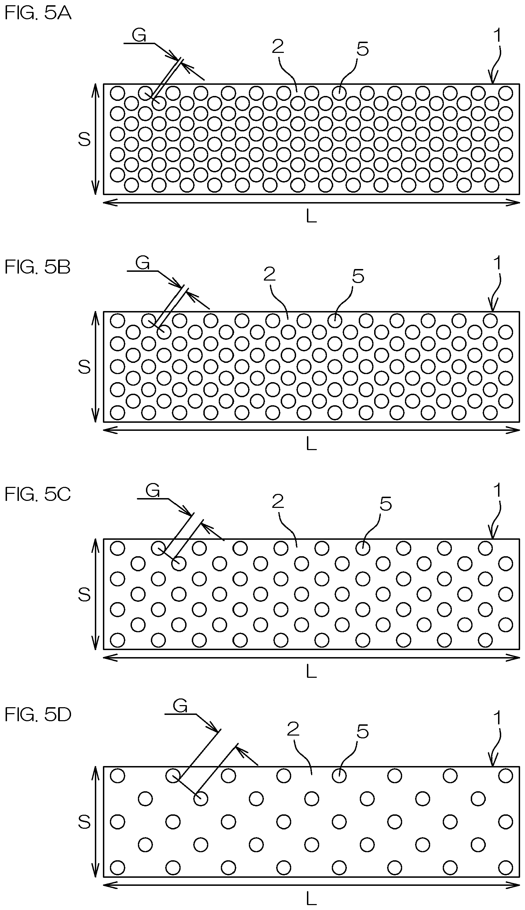

Further, as shown in FIG. 5A, the through-holes 5 were arrayed so that 29 rows each containing five through-holes 5 equidistantly arranged at a predetermined interval in the direction of the shorter edge S of the rectangular sheet separation pad were equidistantly arranged in the direction of the longer edge L with the through-holes 5 in two adjacent rows being staggered in the direction of the shorter edge S by half the predetermined interval. The number of the through-holes 5 was 145.

The nearest adjacent through-holes 5 were located in the adjacent rows as shown in FIG. 5A, and the shortest distance G between the nearest adjacent through-holes 5 was 0.25 mm, which was 25 % of the opening diameter Φ. The opening percentage (the percentage of the total opening area of the through-holes 5 of the contact surface 2 based on the overall area of the contact surface 2) was 47 %.

<Example 2>

A sheet separation pad 1 was produced in substantially the same manner as in Example 1, except that the number and the positions of the through-holes 5 were changed.

More specifically, the openings of the through-holes 5 formed in the contact surface 2 each had an opening diameter of 1 mm and an opening area of 0.79 9 mm$^2$.

Further, as shown in FIG. 5B, the through-holes 5 were arrayed so that 13 rows each containing five through-holes 5 equidistantly arranged at a predetermined interval in the direction of the shorter edge S of the rectangular sheet separation pad and 13 rows each containing four through-holes 5 equidistantly arranged at the predetermined interval in the direction of the shorter edge S were alternately equidistantly arranged in the direction of the longer edge L with the through-holes 5 in two adjacent rows being staggered in the direction of the shorter edge S by half the predetermined interval. The number of the through-holes 5 was 117.

The nearest adjacent through-holes 5 were located in the adjacent rows as shown in FIG. 5B, and the shortest distance G between the nearest adjacent through-holes 5 was 0. 4 mm, which was 40 % of the opening diameter Φ. The opening percentage was 38 %.

<Example 3>

A sheet separation pad 1 was produced in substantially the same manner as in Example 1, except that the number and the positions of the through-holes 5 were changed.

More specifically, the openings of the through-holes 5 formed in the contact surface 2 each had an opening diameter of 1 mm and an opening area of 0.79 mm$^2$.

Further, as shown in FIG. 5C, the through-holes 5 were arrayed so that 10 rows each containing four through-holes 5 equidistantly arranged at a predetermined interval in the direction of the shorter edge S of the rectangular sheet separation pad and 10 rows each containing three through-holes 5 equidistantly arranged at the predetermined interval in the direction of the shorter edge S were alternately equidistantly arranged in the direction of the longer edge L with the through-holes 5 in two adjacent rows being staggered in the direction of the shorter edge S by half the predetermined interval. The number of the through-holes 5 was 70.

The nearest adjacent through-holes 5 were located in the adjacent rows as shown in FIG. 5C, and the shortest distance G between the nearest adjacent through-holes 5 was 0.8 mm, which was 80 % of the opening diameter Φ. The opening percentage was 23 %.

<Example 4>

A sheet separation pad 1 was produced in substantially the same manner as in Example 1, except that the number and the positions of the through-holes 5 were changed.

More specifically, the openings of the through-holes 5 formed in the contact surface 2 each had an opening diameter Φ of 1 mm and an opening area of 0.79 9 mm².

Further, as shown in FIG. 5D, the through-holes 5 were arrayed so that eight rows each containing three through-holes 5 equidistantly arranged at a predetermined interval in the direction of the shorter edge S of the rectangular sheet separation pad and seven rows each containing two through-holes 5 equidistantly arranged at the predetermined interval in the direction of the shorter edge S were alternately equidistantly arranged in the direction of the longer edge L with the through-holes 5 in two adjacent rows being staggered in the direction of the shorter edge S by half the predetermined interval. The number of the through-holes 5 was 38.

The nearest adjacent through-holes 5 were located in the adjacent rows as shown in FIG. 5D, and the shortest distance G between the nearest adjacent through-holes 5 was 1.5 mm, which was 150 % of the opening diameter Φ. The opening percentage was 12 %.

<Example 5>

A sheet separation pad 1 was produced in substantially the same manner as in Example 1, except that the number and the positions of the through-holes 5 were changed.

More specifically, the openings of the through-holes 5 formed in the contact surface 2 each had an opening diameter Φ of 1 mm and an opening area of 0.79 9 mm².

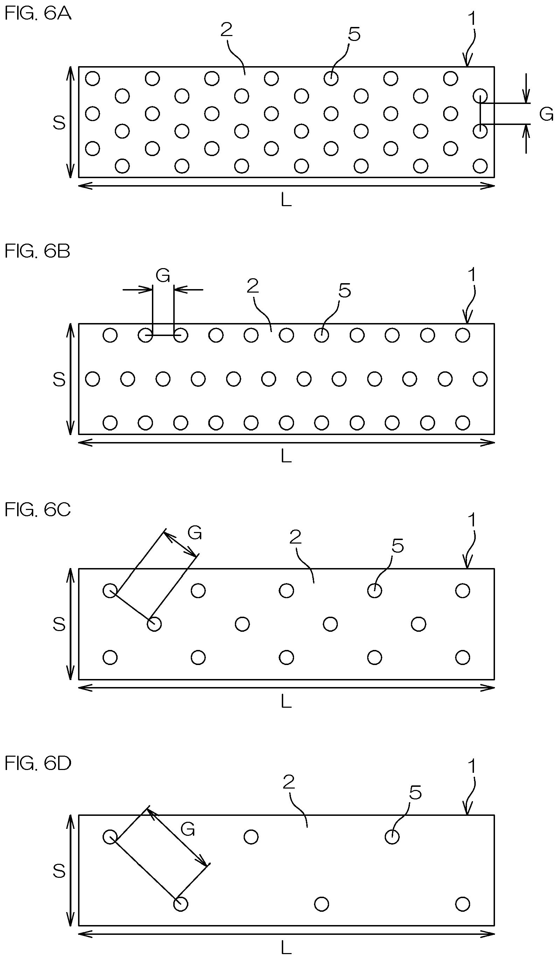

Further, as shown in FIG. 6A, the through-holes 5 were arrayed so that 14 rows each containing three through-holes 5 equidistantly arranged at a predetermined interval in the direction of the shorter edge S of the rectangular sheet separation pad were equidistantly arranged in the direction of the longer edge L with the through-holes 5 in two adjacent rows being staggered in the direction of the shorter edge S by half the predetermined interval. The number of the through-holes 5 was 42.

The nearest adjacent through-holes 5 were located in the same row as shown in FIG. 6A, and the shortest distance G between the nearest adjacent through-holes 5 was 1.5 mm, which was 150 % of the opening diameter Φ. The opening percentage was 14 %.

<Example 6>

A sheet separation pad 1 was produced in substantially the same manner as in Example 1, except that the number and the positions of the through-holes 5 were changed.

More specifically, the openings of the through-holes 5 formed in the contact surface 2 each had an opening diameter Φ of 1 mm and an opening area of 0.79 9 mm².

Further, as shown in FIG. 6B, the through-holes 5 were arrayed so that two rows each containing 11 through-holes 5 equidistantly arranged at a predetermined interval in the direction of the longer edge L of the rectangular sheet separation pad were equidistantly arranged in the direction of the shorter edge S on opposite sides of a row containing 12 through-holes 5 equidistantly arranged at the predetermined interval in the direction of the longer edge L with the through-holes 5 in two adjacent rows being staggered by half the predetermined interval. The number of the through-holes 5 was 34.

The nearest adjacent through-holes 5 were located in the same row as shown in FIG. 6B, and the shortest distance G between the nearest adjacent through-holes 5 was 1.5 mm, which was 150 % of the opening diameter Φ. The opening percentage was 11 %.

<Example 7>

A sheet separation pad 1 was produced in substantially the same manner as in Example 1, except that the number and the positions of the through-holes 5 were changed.

More specifically, the openings of the through-holes 5 formed in the contact surface 2 each had an opening diameter Φ of 1 mm and an opening area of 0.79 9 mm².

Further, as shown in FIG. 6C, the through-holes 5 were arrayed so that two rows each containing five through-holes 5 equidistantly arranged at a predetermined interval in the direction of the longer edge L of the rectangular sheet separation pad were equidistantly arranged in the direction of the shorter edge S on opposite sides of a row containing four through-holes 5 equidistantly arranged at the predetermined interval in the direction of the longer edge L with the through-holes 5 in two adjacent rows being staggered by half the predetermined interval. The number of the through-holes 5 was 14.

The nearest adjacent through-holes 5 were located in the adjacent rows as shown in FIG. 6C, and the shortest distance G between the nearest adjacent through-holes 5 was 3 mm, which was 300 % of the opening diameter Φ. The opening percentage was 5 %.

<Example 8>

A sheet separation pad 1 was produced in substantially the same manner as in Example 1, except that the number and the positions of the through-holes 5 were changed.

More specifically, the openings of the through-holes 5 formed in the contact surface 2 each had an opening diameter 0 of 1 mm and an opening area of 0.79 9 mm$^2$.

Further, as shown in FIG. 6D, the through-holes 5 were arrayed so that two rows each containing three through-holes 5 equidistantly arranged at a predetermined interval in the direction of the longer edge L of the rectangular sheet separation pad were arranged with the through-holes 5 in the two adjacent rows being staggered by half the predetermined interval. The number of the through-holes 5 was 6.

The nearest adjacent through-holes 5 were located in the adjacent rows as shown in FIG. 6D, and the shortest distance G between the nearest adjacent through-holes 5 was 6 mm, which was 600 % of the opening diameter $\Phi$. The opening percentage was 2 %.

<Example 9>

A sheet separation pad 1 was produced in substantially the same manner as in Example 1, except that the opening diameter $\Phi$, the number and the positions of the through-holes 5 were changed.

More specifically, the openings of the through-holes 5 formed in the contact surface 2 each had an opening diameter $\Phi$ of 2.5 mm and an opening area of 4.9 9 mm$^2$.

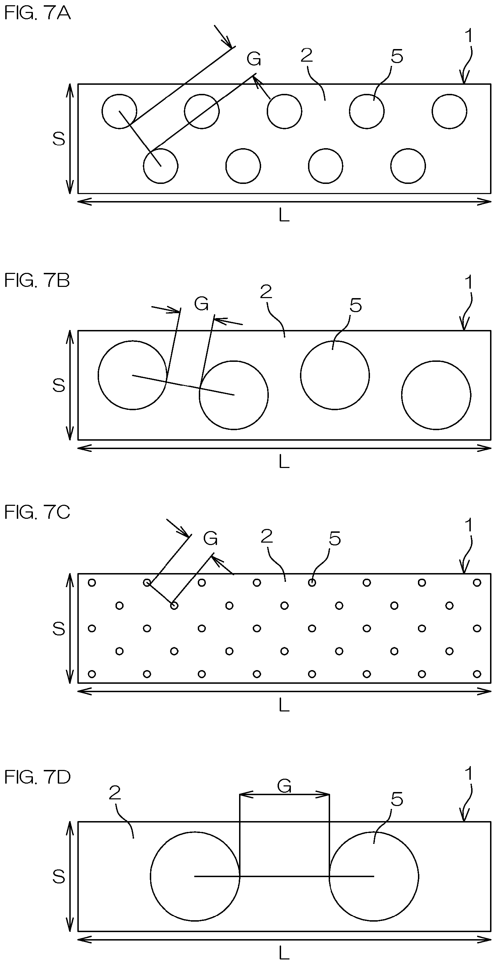

Further, as shown in FIG. 7A, the through-holes 5 were arrayed so that a row containing five through-holes 5 equidistantly arranged at a predetermined interval in the direction of the longer edge L of the rectangular sheet separation pad and a row containing four through-holes 5 equidistantly arranged at the predetermined interval in the direction of the longer edge L were arranged with the through-holes 5 in the two adjacent rows being staggered by half the predetermined interval. The number of the through-holes 5 was 9.

The nearest adjacent through-holes 5 were located in the adjacent rows as shown in FIG. 7A, and the shortest distance G between the nearest adjacent through-holes 5 was 2. 5 mm, which was 100 % of the opening diameter $\Phi$. The opening percentage was 18 %.

<Example 10>

A sheet separation pad 1 was produced in substantially the same manner as in Example 1, except that the opening diameter $\Phi$, the number and the positions of the through-holes 5 were changed.

More specifically, the openings of the through-holes 5 formed in the contact surface 2 each had an opening diameter $\Phi$ of 5 mm and an opening area of 19.6 mm$^2$ .

Further, as shown in FIG. 7B, the through-holes 5 were arrayed so that two rows each containing two through-holes 5 arranged at a predetermined interval in the direction of the longer edge L of the rectangular sheet separation pad were arranged with the through-holes 5 in the two adjacent rows being staggered by half the predetermined interval. The number of the through-holes 5 was four.

The nearest adjacent through-holes 5 were located in the adjacent rows as shown in FIG. 7B, and the shortest distance G between the nearest adjacent through-holes 5 was 2.5 mm, which was 50 % of the opening diameter $\Phi$. The opening percentage was 33 %.

<Example A>

A sheet separation pad was produced in substantially the same manner as in Example 1, except that no through-hole 5 was formed. The opening percentage was 0 %.

<Example B>

A sheet separation pad 1 was produced in substantially the same manner as in Example 1, except that the opening diameter $\Phi$, the number and the positions of the through-holes 5 were changed.

More specifically, the openings of the through-holes 5 formed in the contact surface 2 each had an opening diameter $\Phi$ of 0.5 mm and an opening area of 0.20 mm$^2$.

Further, as shown in FIG. 7C, the through-holes 5 were arrayed so that eight rows each containing three through-holes 5 equidistantly arranged at a predetermined interval in the direction of the shorter edge S of the rectangular sheet separation pad and seven rows each containing two through-holes 5 equidistantly arranged at the predetermined interval in the direction of the shorter edge S were alternately equidistantly arranged in the direction of the longer edge L with the through-holes 5 in two adjacent rows being staggered in the direction of the shorter edge S by half the predetermined interval. The number of the through-holes 5 was 38.

The nearest adjacent through-holes 5 were located in the adjacent rows as shown in FIG. 7C, and the shortest distance G between the nearest adjacent through-holes 5 was 2 mm, which was 400 % of the opening diameter. The opening percentage was 3 %.

<Example C>

A sheet separation pad 1 was produced in substantially the same manner as in Example 1, except that the opening diameter Φ, the number and the positions of the through-holes 5 were changed.

More specifically, the openings of the through-holes 5 formed in the contact surface 2 each had an opening diameter Φ of 6.5 mm and an opening area of 33.2 mm$^2$.

Further, as shown in FIG. 7D, two through-holes 5 were arranged in the direction of the longer edge L of the rectangular sheet separation pad at middle positions with respect to the direction of the shorter edge S. The number of the through-holes 5 was two.

The shortest distance G between the two adjacent through-holes 5 was 3.25 mm, which was 50 % of the opening diameter Φ. The opening percentage was 28 %.

<Measurement of Friction Coefficient>

The friction coefficient (initial friction coefficient) of the contact surface of each of the sheet separation pads produced in Examples was measured with respect to a plain paper sheet (PROPER BOND PAPER (PB PAPER) available from Canon Inc.) by means of a surface texture measurement device (TRIBOGEAR (registered trade mark) Type HEIDON (registered trade mark) 14DR available from Shinto Scientific Co., Ltd.) immediately after the production of the sheet separation pads. Measurement conditions were a load of 1.96 N (200 gf) and a speed of 600 mm/min.

The sheet separation pads produced in Examples were each incorporated instead of a genuine separation pad in a sheet feed cassette of a monochromatic laser printer (LBP-1420 available from Canon Inc.) and then 10,000 PPC sheets were sequentially fed out. Thereafter, the friction coefficient (post-feeding friction coefficient) was measured under the same conditions as described above, and a change in friction. coefficient from the initial value was determined from the following expression (1):

```
(Change in Friction Coefficient) = (Initial Friction

Coefficient) - (Post-Feeding Friction Coefficient)

                                      ... (1)
```

With a smaller change in friction coefficient, the sheet separation pad is more excellent in durability. Therefore, a sheet separation pad having a change of less than 0.13 was rated as excellent (◎), and a sheet separation pad having a change of not less than 0.13 and less than 0.20 was rated as acceptable (O). Further, a sheet separation pad having a change of not less than 0.20 was rated as unacceptable (X). The results are shown in Tables 1 and 2.

Table 1

| | Example A | Example B | Example 1 | Example 2 | Example 3 | Example 4 | Example 5 |
|---|---|---|---|---|---|---|---|
| Through-holes | | | | | | | |
| Opening diameter Φ (mm) | - | 0.5 | 1 | 1 | 1 | 1 | 1 |
| Opening area (mm$^2$) | - | 0.20 | 0.79 | 0.79 | 0.79 | 0.79 | 0.79 |
| Number | - | 38 | 145 | 117 | 70 | 38 | 42 |

(continued)

|  | | Example A | Example B | Example 1 | Example 2 | Example 3 | Example 4 | Example 5 |
|---|---|---|---|---|---|---|---|---|
| Shortest Distance G | mm | - | 2 | 0.25 | 0.4 | 0.8 | 1.5 | 1.5 |
|  | % | - | 400 | 25 | 40 | 80 | 150 | 150 |
| Opening percentage (%) | | - | 3 | 47 | 38 | 23 | 12 | 14 |
| Friction Coefficient | | | | | | | | |
| Initial value | | 0.94 | 0.89 | 0.81 | 0.83 | 0.84 | 0.88 | 0.85 |
| Post-feeding value | | 0.60 | 0.65 | 0.67 | 0.70 | 0.71 | 0.77 | 0.76 |
| Change | | 0.34 | 0.24 | 0.14 | 0.13 | 0.13 | 0.11 | 0.09 |
| Evaluation | | × | × | ○ | ○ | ○ | ◎ | ◎ |

Table 2

|  | | Example 6 | Example 7 | Example 8 | Example 9 | Example 10 | Example C |
|---|---|---|---|---|---|---|---|
| Through-holes | | | | | | | |
| Opening diameter Φ (mm) | | 1 | 1 | 1 | 2.5 | 5 | 6.5 |
| Opening area (mm$^2$) | | 0.79 | 0.79 | 0.79 | 4.9 | 19.6 | 33.2 |
| Number | | 34 | 14 | 6 | 9 | 4 | 2 |
| Shortest Distance G | mm | 1.5 | 3 | 6 | 2.5 | 2.5 | 3.25 |
|  | % | 150 | 300 | 600 | 100 | 50 | 50 |
| Opening percentage (%) | | 11 | 5 | 2 | 18 | 33 | 28 |
| Friction Coefficient | | | | | | | |
| Initial value | | 0.90 | 0.88 | 0.88 | 0.84 | 0.83 | 0.84 |
| Post-feeding value | | 0.79 | 0.75 | 0.73 | 0.71 | 0.70 | 0.64 |
| Change | | 0.11 | 0.13 | 0.15 | 0.13 | 0.13 | 0.20 |
| Evaluation | | ◎ | ○ | ○ | ○ | ○ | × |

The results for Example A shown in Tables 1 and 2 indicate that, where the friction coefficient of the contact surface was controlled only by the minute surface state of the contact surface without the provision of the through-holes, the friction coefficient was significantly changed by the wear and the adhesion of paper dust, toner and the like by the sheet feeding. Therefore, the sheet separation pad failed to have excellent sheet separating capability and excellent sheet feeding capability for a longer period of time.

In contrast, the results for Examples 1 to 10 indicate that, where the friction coefficient was controlled by the provision of the through-holes, the initial friction coefficient was maintained without any influence of the wear and the adhesion of paper dust, toner and the like by the sheet feeding. Therefore, the sheet separation pads of Examples 1 to 10 were excellent in sheet separating capability as well as sheet feeding capability for a longer period of time.

The results for Examples 1 to 10 indicate that it was possible to control the friction coefficient within an optimum range according to the type of sheets by changing the opening area, the opening diameter Φ, the number and the density of the through-holes.

However, the results for Examples B and C and Examples 1 to 10 indicate that, in order to provide these effects, the openings of the through-holes formed in the contact surface should each have an opening area of not less than 0.7 mm$^2$ and not greater than 20 mm$^2$. Where the openings of the through-holes are round, the opening diameter Φ is preferably not less than 1.0 mm and not greater than 5.0 mm, and the shortest distance G between the nearest adjacent recesses or through-holes is preferably not less than 25 % and not greater than 600 % of the opening diameter Φ. Further, the opening percentage is preferably not less than 30 %.

[DESCRIPTION OF REFERENCE CHARACTERS]

| | |
|---|---|
| 1: | Sheet separation pad |
| 2: | Contact surface |
| 3: | Opposite surface |
| 4: | Recesses |
| 5: | Through-holes |
| 6: | Bottom |
| 7: | Sheet feeding mechanism |
| 8: | Outer peripheral surface |
| 9: | Sheet feed roller |
| 10: | Support base |
| 11: | Sheet |
| C1, C2: | Rows |
| G: | Shortest distance |
| i: | Interval |
| L: | Longer edge |
| S: | shorter edge |
| t: | Line |
| Φ: | Opening diameter |

**Claims**

1. A sheet separation pad (1) comprising a nonporous planar body which has a surface serving as a contact surface (2) to be brought into contact with a sheet, and a plurality of recesses (4) each having a predetermined depth (D) as measured in a thickness direction perpendicular to the contact surface (2), the recesses (4) each having a round opening formed in the contact surface (2),
**characterized in that**
the openings of the recesses (4) formed in the contact surface (2) each have an opening area of not less than 0.7 $mm^2$ and not greater than 20 $mm^2$.

2. The sheet separation pad (1) according to claim 1, wherein the openings of the recesses (4) each have an opening diameter Φ of not less than 1.0 mm and not greater than 5.0 mm, and the shortest distance G between the nearest adjacent ones of the recesses (4) is not less than 25 % and not greater than 600 % of the opening diameter Φ.

3. The sheet separation pad (1) according to claim 1, wherein the percentage of the total opening area of the openings of the recesses (4) based on the overall area of the contact surface (2) is not greater than 50 %.

4. The sheet separation pad (1) according to claim 2, wherein the percentage of the total opening area of the openings of the recesses (4) based on the overall area of the contact surface (2) is not greater than 50 %.

5. An image forming apparatus comprising the sheet separation pad (1) according to claim 1.

6. An image forming apparatus comprising the sheet separation pad (1) according to claim 2.

7. An image forming apparatus comprising the sheet separation pad (1) according to claim 3.

8. An image forming apparatus comprising the sheet separation pad (1) according to claim 4.

**Patentansprüche**

1. Blatttrennungsplatte (1), die einen nicht porösen planaren Körper, der eine Fläche aufweist, die als eine Kontaktfläche (2) dient, die mit einem Blatt in Kontakt zu bringen ist, und eine Mehrzahl von Ausnehmungen (4) umfasst, die jeweils eine vorbestimmte Tiefe (D), wie in einer Dickenrichtung senkrecht zu der Kontaktfläche (2) gemessen, aufweisen, wobei die Ausnehmungen (4) jeweils eine in der Kontaktfläche (2) gebildete runde Öffnung aufweisen, **dadurch gekennzeichnet, dass**
die in der Kontaktfläche (2) gebildeten Öffnungen der Ausnehmungen (4) jeweils eine Öffnungsfläche von nicht kleiner als 0,7 mm$^2$ und nicht größer als 20 mm$^2$ aufweisen.

**2.** Blatttrennungsplatte (1) nach Anspruch 1, wobei die Öffnungen der Ausnehmungen (4) jeweils einen Öffnungsdurchmesser Φ von nicht kleiner als 1,0 mm und nicht größer als 5,0 mm aufweisen, und der kürzeste Abstand G zwischen den nächstliegend benachbarten der Ausnehmungen (4) nicht kleiner als 25% und nicht größer als 600% des Öffnungsdurchmessers Φ ist.

**3.** Blatttrennungsplatte (1) nach Anspruch 1, wobei der Prozentsatz der Gesamtöffnungsfläche der Öffnungen der Ausnehmungen (4) auf der Basis der Gesamtfläche der Kontaktfläche (2) nicht größer als 50% ist.

**4.** Blatttrennungsplatte (1) nach Anspruch 2, wobei der Prozentsatz der Gesamtöffnungsfläche der Öffnungen der Ausnehmungen (4) auf der Basis der Gesamtfläche der Kontaktfläche (2) nicht größer als 50% ist.

**5.** Bilderzeugungsvorrichtung, die die Blatttrennungsplatte (1) nach Anspruch 1 umfasst.

**6.** Bilderzeugungsvorrichtung, die die Blatttrennungsplatte (1) nach Anspruch 2 umfasst.

**7.** Bilderzeugungsvorrichtung, die die Blatttrennungsplatte (1) nach Anspruch 3 umfasst.

**8.** Bilderzeugungsvorrichtung, die die Blatttrennungsplatte (1) nach Anspruch 4 umfasst.

**Revendications**

**1.** Patin de séparation de feuille (1) comprenant un corps plan non poreux qui a une surface servant de surface de contact (2) à amener en contact avec une feuille, et une pluralité d'évidements (4) ayant chacun une profondeur prédéterminée (D) telle que mesurée dans une direction en épaisseur perpendiculaire à la surface de contact (2), les évidements (4) ayant chacun une ouverture ronde formée dans la surface de contact (2),
**caractérisé en ce que**
les ouvertures des évidements (4) formés dans la surface de contact (2) ont chacune une superficie d'ouverture qui n'est pas inférieure à 0,7 mm$^2$ et qui n'est pas supérieure à 20 mm$^2$.

**2.** Patin de séparation de feuille (1) selon la revendication 1, dans lequel les ouvertures des évidements (4) ont chacune un diamètre d'ouverture Φ qui n'est pas inférieur à 1,0 mm et qui n'est pas supérieur à 5,0 millimètre, et la distance la plus courte (G) entre les évidements adjacents les plus proches (4) n'est pas inférieure à 25 % et n'est pas supérieure à 600 % du diamètre d'ouverture Φ.

**3.** Patin de séparation de feuille (1) selon la revendication 1, dans lequel le pourcentage de la superficie d'ouverture totale des ouvertures des évidements (4) basé sur la superficie totale de la surface de contact (2) n'est pas supérieur à 50 %.

**4.** Patin de séparation de feuille (1) selon la revendication 2, dans lequel le pourcentage de la superficie d'ouverture totale des ouvertures des évidements (4) basé sur la superficie totale de la surface de contact (2) n'est pas supérieur à 50 %.

**5.** Appareil de formation d'image comprenant le patin de séparation de feuille (1) selon la revendication 1.

**6.** Appareil de formation d'image comprenant le patin de séparation de feuille (1) selon la revendication 2.

**7.** Appareil de formation d'image comprenant le patin de séparation de feuille (1) selon la revendication 3.

**8.** Appareil de formation d'image comprenant le patin de séparation de feuille (1) selon la revendication 4.

FIG. 1

FIG. 2

FIG. 3A

FIG. 3B

FIG. 4

FIG. 5A

FIG. 5B

FIG. 5C

FIG. 5D

FIG. 6A

FIG. 6B

FIG. 6C

FIG. 6D

FIG. 7A

FIG. 7B

FIG. 7C

FIG. 7D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI5199343070 A
- JP 3977819 B
- JP 4176592 B
- JP HEI71995112837 A
- JP HEI91997202474 A
- JP 2003118860 A
- JP 2001322731 A